# NEUE EUROPÄISCHE PATENTSCHRIFT

(11) **EP 2 188 108 B2**
(45) Veröffentlichungstag und Bekanntmachung des Hinweises auf die Entscheidung über den Einspruch: **22.02.2023**
(45) Hinweis auf die Patenterteilung: 26.10.2011
(21) Anmeldenummer: 08784353.8
(22) Anmeldetag: 15.07.2008
(51) Int. Cl.: B29C 49/78, G01B 11/06

(54) **VERFAHREN ZUR BLASFORMUNG VON BEHÄLTERN**
METHOD FOR BLOW-MOLDING CONTAINERS
PROCÉDÉ DE MOULAGE PAR SOUFFLAGE DE RÉCIPIENTS

(30) Priorität: 21.09.2007 DE 102007046387
(43) Veröffentlichungstag der Anmeldung: 26.05.2010
(73) Patentinhaber: KHS GmbH, 44143 Dortmund (DE)
(72) Erfinder: LEWIN, Frank, 22889 Tangstedt (DE); LINKE, Michael, 22047 Hamburg (DE)
(74) Vertreter: Eisenführ Speiser
(86) Internationale Anmeldenummer: PCT/DE2008/001172
(87) Internationale Veröffentlichungsnummer: WO 2009/036715

(56) Entgegenhaltungen:
- EP-A- 1 798 017
- WO-A-2007/110018
- DE-A1-102004 049 541
- US-A- 5 139 406
- US-A1- 2006 012 804

## Beschreibung

Die Erfindung betrifft ein Verfahren zur Blasformung von Behältern, bei dem ein Vorformling aus einem thermoplastischen Material nach einer thermischen Konditionierung entlang eines Transportweges im Bereich einer Heizstrecke innerhalb einer Blasform durch Blasdruckeinwirkung in den Behälter umgeformt wird.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druck-luft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zurTemperierung der Vorformlinge werden in der DE-OS 23 52 926 erläutert.

Aus der EP-A-1798017 ist ein Verfahren zur Blasformung von Behältern gemäß dem Oberbergriff des Anspruchs 1 bekannt, bei der Heizstrahler mit einer maximalen Strahlungsintensität im NIR-Bereich verwendet werden.

Aus der DE 10 2004 049 541 A1 ist ein Meßsystem für Wanddickenmessungen unter Verwendung eines chromatisch nicht korrigierten Objektives bekannt. Die Ermittlung der Wanddicke erfolgt unter Berücksichtigung von zwei unterschiedlichen Wellenlängen des reflektierten Lichtes.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Bei der Durchführung einer blastechnischen Behälterformung besteht eine wesentliche Aufgabe darin, in der Behälterwandung eine vorgegebene Materialverteilung zu erreichen. Ein wesentlicher Parameter zur Vorgabe der sich ergebenden Materialverteilung stellt die Verteilung der vor der Blasformung in den Vorformlingen realisierten Wärmeverteilung dar.

Die Wärmeverteilung wird typischerweise derart realisiert, daß in einer Umfangsrichtung der Vorformlinge ein gleiches Temperaturniveau und in einer Längsrichtung der Vorformlinge ein Temperaturprofil erzeugt wird. Darüber hinaus erfolgt auch durch die Wand des Vorformlings hindurch von außen nach innen die Vorgabe eines geeigneten Temperaturprofils. Grundsätzlich ist davon auszugehen, daß Bereiche des Vorformlings mit einer geringeren Temperatur zu dickeren Wandungsbereichen des geblasenen Behälters führen und daß die wärmeren Bereiche des Vorformlings bei der Durchführung der Blasverformung stärker verstreckt werden und hierdurch zu dünneren Wandungsbereichen des geblasenen Behälters führen.

Die Temperatur im Bereich der Vorformlinge kann mit sogenannten Pyrometern gemessen werden. Eine meßtechnische Erfassung einer konkreten Wanddicke im Bereich der geblasenen Behälter kann mit sogenannten Wanddickensensoren erfolgen, die beispielsweise optisch oder unter Verwendung von Schallwellen arbeiten.

Eine konkrete Einstellung der für die Beheizung der Vorformlinge verwendeten Heizelemente sowie der einzelnen Heizstrahler erfolgt überwiegend manuell nach einer Auswertung der Wanddickenverteilung im Bereich der geblasenen Behälter. Aufgrund der Mehrzahl der in einer Transportrichtung der Vorformlinge hintereinander angeordneten Heizelemente sowie auftretender thermischer Ausgleichsvorgänge erfolgt die Einstellung adaptiv und manuell in einem umfangreichen Testbetrieb, in dem empirisch Einstellungen der Heizelemente verändert und die Auswirkungen auf die geblasenen Behälter erfaßt werden. Ein derartiges Vorgehen erweist sich in der Regel als sehr zeitaufwendig. Bei erheblichen Temperaturschwankungen der Umgebungstemperatur oder der Luftfeuchtigkeit sind darüber hinaus häufig Nacheinstellungen erforderlich.

Zur Messung einer Wanddicke der geblasenen Behälter können beispielsweise optische Meßverfahren eingesetzt werden. Ein bekanntes derartiges Verfahren arbeitet derart, daß die Wandung mit Licht bestrahlt wird, das einerseits von einer äußeren und andererseits von einer inneren Oberfläche der Wandung reflektiert wird. Die reflektierten Signale werden von einem Sensor empfangen und die Zeitdifferenz zwischen den einzelnen Reflexionen wird ausgewertet und in die vorliegende Wanddicke umgerechnet. Aufgrund der sehr geringen Zeitdifferenz zwischen den beiden Reflexionen kann ein derartiges Meßverfahren noch nicht alle Anforderungen erfüllen, die an eine genaue Messung gestellt werden.

Für die Vermessung von Oberflächen ist es aus der DE 10 2004 049 541 bereits bekannt, in einem optischen Meßsystem ein chromatisch nicht korrigiertes Objektiv zu verwenden und aus einem Reflexionssignal eine Oberflächenrauhigkeit zu ermitteln. Es wird hierbei ausgenutzt, daß ein signifikantes Reflexionssignal nur im Fokussierpunkt des Objektives generiert wird und daß der Fokussierpunkt frequenzabhängig ist. Unterschiedliche Frequenzen werden somit mit unterschiedlichen Entfernungen zum Objektiv fokussiert. Dies führt dazu, daß bei einer strukturierten Oberfläche im Bereich der dem Objektiv zugewandten Oberflächen andere Spektralanteile reflektiert werden als in Vertiefungen der Oberfläche. Durch eine Erfassung der Frequenzanteile der Reflexionssignale kann die Oberflächenrauhigkeit ermittelt werden. Dieses Meßverfahren zeichnet sich dadurch aus, daß auch bei vergleichsweise gering dimensionierten Oberflächenstrukturen eine genaue Vermessung möglich ist.

Aufgabe der vorliegenden Erfindung ist es, ein Verfahren der einleitend genannten Art derart zu verbessern, daß mit geringem maschinenbaulichen Aufwand eine qualitativ hochwertige Wanddickenmessung bei gleichzeitig hohen Durchsatzraten unterstützt wird.

Diese Aufgabe wird durch das Verfahren des Anspruchs 1 gelöst.

Die erfindungsgemäße Übertragung des für Oberflächenvermessungen bekannten Meßverfahrens auf eine Wanddickenmessung von Behältern ermöglicht eine sehr genaue Wanddickenmessung auch bei hohen Durchsatzraten der Blasmaschine. Das entsprechende Meßverfahren kann beispielsweise im Rahmen einer reinen Produktionsüberwachung eingesetzt werden, um die Einhaltung vorgegebener Wanddicken zu überwachen und/oder zu protokollieren und/oder anzuzeigen. Erfindungsgemäß ist die Wanddickenmeßeinrichtung in einen Regelkreis integriert, um die Beheizung von Vorformlingen derart zu steuern, daß vorgegebene Wanddicken bzw. Wanddickenverteilungen erreicht werden.

Gemäß einer bevorzugten Ausführungsform ist daran gedacht, daß die Heizstrahler an eine Regelung angeschlossen sind, die mit mindestens einem Sensor zur Erfassung einer Wanddicke des Behälters verbunden ist und daß der Sensor auf einem Höhenniveau angeordnet ist, das einem Höhenniveau des Heizstrahlers unter Einbeziehung eines Reckfaktors entspricht, der durch das Verhältnis der Länge des verstreckten Bereiches des Behälters zur Länge des zugehörigen Bereiches des Vorformlinges gebildet ist.

Durch die Anordnung des Wanddickensensors auf einem Höhenniveau des Behälters, das direkt einem Höhenniveau eines korrespondierenden Heizstrahlers zugeordnet ist, ist es im Rahmen einer automatischen Regelung möglich, die Wärmeemission des Heizstrahlers derart einzustellen, daß exakt die vorgesehene Wanddicke des Behälters erreicht wird. Die Regelung ermöglicht einen weitgehenden automatischen Betrieb ohne die Notwendigkeitvon manuellen Einstellungen der Heizparameter. Insbesondere werden automatisch Störungen ausgeregelt, die sich aus der Veränderung von Umgebungsparametern ergeben. Die Regelung wirkt darüber hinaus nicht auf Parameter ein, die lediglich indirekt die sich ergebenden Wanddicken beeinflussen, sondern es wird direkt der wesentliche Ausgangsparameter als Istwert für die Regelung berücksichtigt.

Eine hohe Konturtreue der geblasenen Behälter läßt sich dadurch erreichen, daß die Wanddickenmessung des Behälters auf mehreren unterschiedlichen Höhenniveaus durchgeführt wird.

Mehrere Wanddickenmessungen unter Verwendung lediglich einer Auswertungseinrichtung werden dadurch unterstützt, daß die Messung auf den unterschiedlichen Höhenniveaus zeitversetzt durchgeführt wird.

Eine Unterdrückung von StörReflexionen wird dadurch erleichtert, daß eine Hauptausbreitungsrichtung der Strahlung im wesentlichen radial zu einer Behälterlängsachse ausgerichtet wird.

Eine schnelle Durchführung der Messung unter Vermeidung zusätzlicher Handhabungseinrichtungen wird dadurch ermöglicht, daß die Wanddickenmessung im Bereich eines rotierenden Übergaberades durchgeführt wird.

Die Durchführung von zeitversetzten Messungen wird insbesondere dadurch unterstützt, daß die Hauptausbreitungsrichtungen der einzelnen Fokussiereinrichtungen in einer horizontalen Projektionsebene im Bereich ihrer Schnittpunkte mit der Behälterwandung derart beabstandet werden, daß der Zeitversatz zwischen den einzelnen Messungen der einzelnen Fokussiereinrichtungen jeweils der Zeit entspricht, die der Behälter entlang seines vom Übergaberad vorgegebenen Transportweges benötigt, um von einem Meßort zum nächstfolgenden Meßort zu gelangen.

Die Nutzung der Meßinformationen innerhalb eines Regelkreises zur Regelung der Wanddicke des Behälters wird dadurch erreicht, daß ein dem jeweiligen Höhenniveau einer Meßstelle des Behälters zugeordneter Heizstrahler hinsichtlich seiner Heizleistung geregelt wird und daß der Regelung als Sollwert ein Vorgabewert für die Wandstärke und als Istwert die gemessene Wanddicke zugeführt wird.

Eine gezielte Beeinflussung der Wanddickenverhältnisse auf unterschiedlichen Höhenniveaus kann dadurch realisiert werden, daß mindestens zwei Paare von Meßeinrichtungen für die Wanddicke des Behälters und Wanddickenreglern, die jeweils auf einander entsprechenden Höhenniveaus angeordnet sind, in jeweils einen Regelkreis zur Durchführung einer niveauspezifischen Wanddickenregelung integriert werden.

Eine weitere Qualitätsverbesserung der geblasenen Behälter läßt sich dadurch erreichen, daß eine Temperaturmessung der Vorformlinge durchgeführt wird.

Zur Bereitstellung einer einfachen Regelungsstruktur wird vorgeschlagen, daß eine Temperaturregelung und eine Wanddickenregelung in einer Kaskadenregelung durchgeführt werden.

Eine direkte Regelung der Wanddickenverteilung wird dadurch unterstützt, daß die Temperaturregelung in einem inneren Regelkreis der Kaskadenregelung und die Wanddickenregelung in einem äußeren Regelkreis der Kaskadenregelung durchgeführt werden.

Eine thermische Beeinflussung der Vorformlinge durch alle verwendeten Heizelemente kann dadurch berücksichtigt werden, daß eine Temperaturmessung der Vorformlinge hinter der Heizstrecke durchgeführt wird.

Zur Berücksichtigung thermischer Ausgleichsvorgänge im Material der Vorformlinge wird vorgeschlagen, daß die Temperaturmessung der Vorformlinge in Transportrichtung der Vorformlinge zwischen der Heizstrecke und einem Blasrad durchgeführt wird.

Ein einfacher Vorrichtungsaufbau läßt sich dadurch erreichen, daß eine Wanddickenmessung in Transportrichtung hinter dem Blasrad durchgeführt wird.

Eine schnelle Durchführung von Regelungsvorgängen wird dadurch unterstützt, daß lediglich ein Teil der Heizelemente der Heizstrecke vom Wanddickenregler gesteuert werden.

Geringe Verzögerungszeiten bei einer Durchführung der Regelung werden dadurch erreicht, daß mindestens das in Transportrichtung der Vorformlinge letzte Heizelement vom Wanddickenregler gesteuert wird.

Ein vereinfachter Aufbau wird dadurch bereitgestellt, daß mindestens zwei Heizelemente parallel vom Wanddikkenregler angesteuert werden.

Ebenfalls trägt es zu einem vereinfachten Grundaufbau bei, daß mindestens das in Transportrichtung der Vorformlinge erste Heizelement ungeregelt eine Grundtemperatur der Vorformlinge erzeugt.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: einen Querschnitt durch ein Heizelement mit einer Mehrzahl übereinander angeordneter Heizstrahler sowie einen zugeordneten Vorformling,
- Fig. 6: einen Querschnitt durch eine Sensoranordnung zur Messung von Wanddicken eines geblasenen Behälters,
- Fig. 7: eine Prinzipdarstellung einer Blasmaschine mit Heizstrecke, Blasrad, Pyrometer und Wanddickensensor,
- Fig. 8: eine schematische Darstellung eines Regelungskonzepts zur Regelung der Temperatur der Vorformlinge sowie zur Regelung der Wanddicke der geblasenen Behälter,
- Fig. 9: eine schematische Darstellung zur Verwendung eines chromatisch umkorrigierten Objektives,
- Fig.: 10ein Diagramm zur Veranschaulichung von Reflexionssignalen mit unterschiedlichen Frequenzen,
- Fig. 11: eine Seitenansicht eines Übergaberades für geblasene Flaschen mit auf unterschiedlichen Meßhöhen angebrachten optischen Sensoren,
- Fig. 12: eine Draufsicht gemäß Blickrichtung XII in Fig. 11,
- Fig. 13: eine weitere perspektivische Darstellung der Anordnung gemäß Fig. 11 in einer anderen Blickrichtung und
- Fig. 14: eine Seitenansicht gemäß Blickrichtung XIV in Fig. 11.

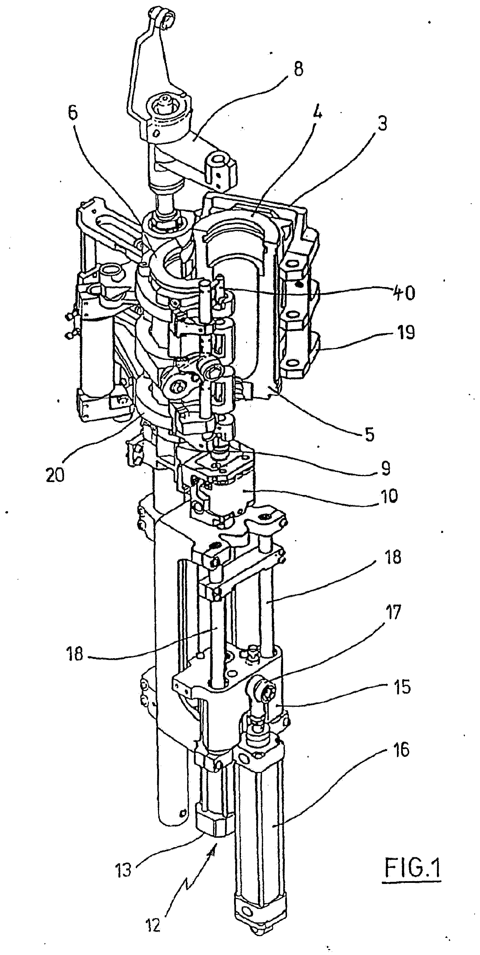

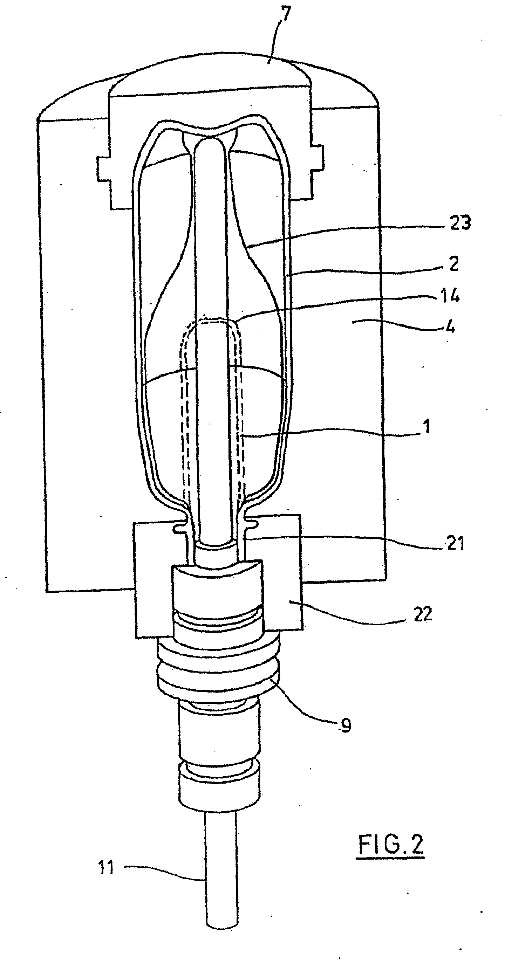

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

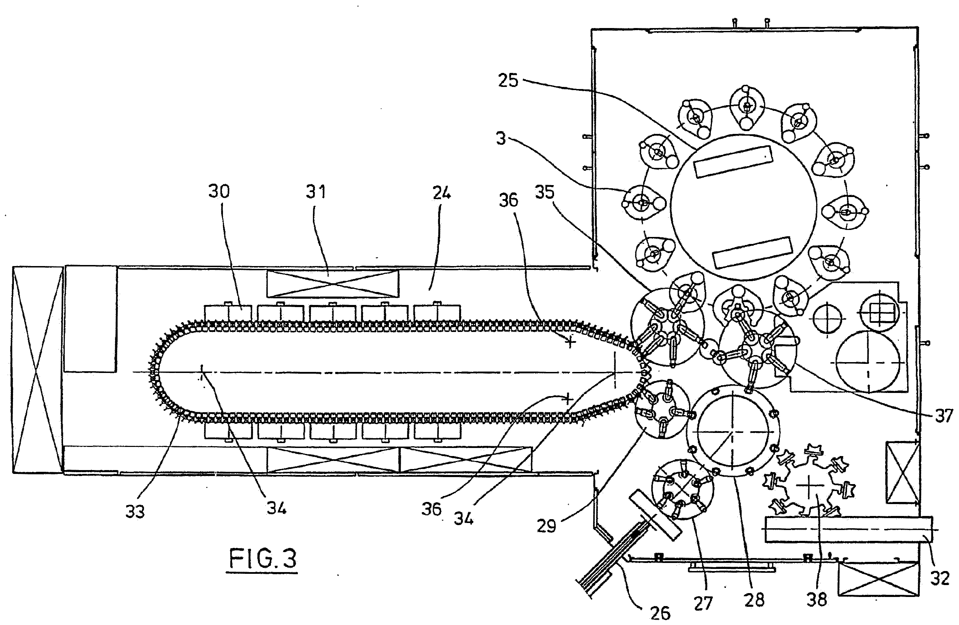

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizelement (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

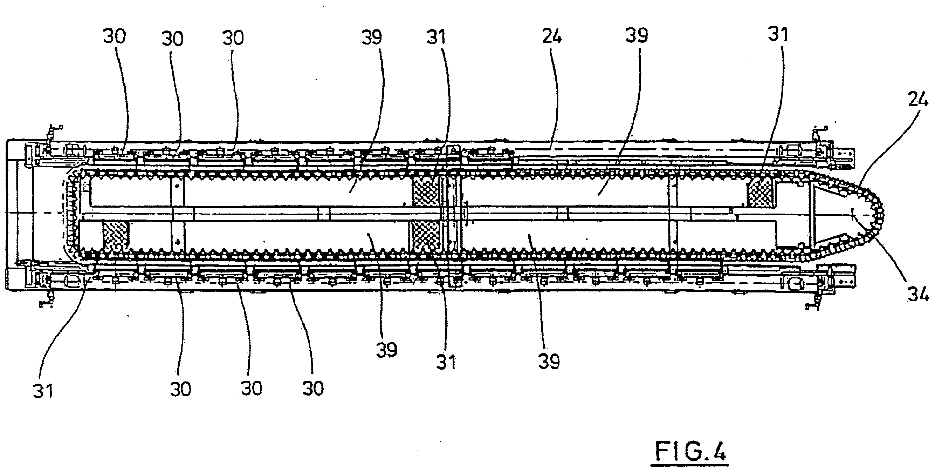

In der in Fig. 4 dargestellten modifizierten Heizstrekke (24) können durch die größere Anzahl von Heizelementen (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizelementen (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizelementen (30) gegenüberliegenden Oberflächen Reflektoren für die Heizstrahlung bereitstellen, ebenfalls ist es möglich, über die abgegebene Kühlluft auch eine Kühlung der Heizelemente (30) zu realisieren.

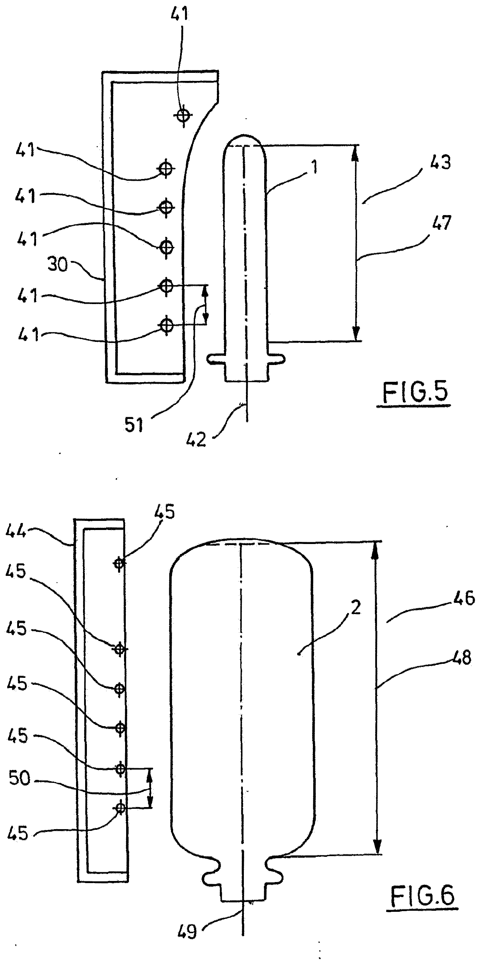

Fig. 5 zeigt eine schematische Darstellung eines Heizelementes (30), das mit einer Mehrzahl übereinander angeordneter Heizstrahler (41) versehen ist. Unter Verwendung der Heizstrahler (41) ist es möglich, in Richtung einer Längsachse (42) des Vorformlings (1) ein vorgegebenes Temperaturprofil zu erzeugen. Bei der Durchführung eines Reckvorganges wird im wesentlichen ein Streckbereich (43) des Vorformlings (1) einer biaxialen Orientierung unterworfen.

Fig. 6 zeigt eine schematische Darstellung einer Meßeinrichtung (44) mit einer Mehrzahl übereinander angeordneter Sensoren (45) zur Erfassung einer Wanddicke des Behälters (2). Der Streckbereich (43) des Vorformlings (1) wurde als Folge des Reck- und Blasvorganges in einen Orientierungsbereich (46) des Behälters (2) umgeformt. Der Streckbereich (43) des Vorformlinges (1) weist eine Ausgangslänge (47) auf und der Orientierungsbereich (46) des Behälters (2) ist mit einer Produktlänge (48) versehen. Der Quotient aus der Produktlänge (48) und der Ausgangslänge (47) ergibt den realisierten Reckfaktor.

Der Behälter (2) weist eine Behälterlängsachse (49) auf, in deren Richtung hintereinander die Sensoren (45) angeordnet sind. Ein Sensorabstand (50) ergibt sich aus einem Heizstrahlerabstand (51) multipliziert mit dem Reckfaktor.

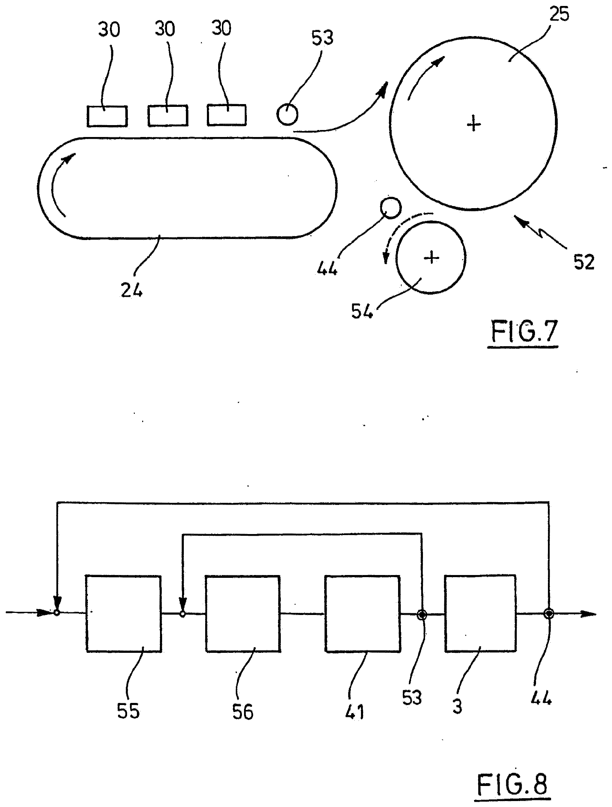

Fig. 7 zeigt eine schematische Darstellung einer Blasmaschine (52) in einer gegenüber der Darstellung in Fig. 3 stark vereinfachten und schematisierten Struktur. Es ist zu erkennen, daß: ein Temperatursensor (53) zur Erfassung einer Temperatur der Vorformlinge (1) in einer Transportrichtung der Vorformlinge (1) im Bereich der Heizstrecke (24) hinter den Heizelementen (30) angeordnet ist. Vorteilhafterweise ist der Temperatursensor (53) möglichst dicht am Blasrad (25) angeordnet, um eine Temperaturerfassung nach einer Durchführung von thermischen Ausgleichsvorgängen innerhalb der Wandung der Vorformlinge (1) zu ermöglichen. Als Temperatursensor (53) kann beispielsweise ein Pyrometer verwendet werden. Insbesondere ist es möglich, mehrere Temperatursensoren (53) in Richtung der Längsachse (42) der Vorformlinge (1) übereinander anzuordnen, um ein Temperaturprofil der Vorformlinge (1) zu erfassen. Als besonders vorteilhaft erweist es sich, eine Mehrzahl von Temperatursensoren (53) jeweils auf einem Höhenniveau der Heizstrahler (41) zu positionieren, um eine direkte Regelung der einzelnen Heizstrahler (41) durchführen zu können.

Dargestellt ist in Fig. 7 ebenfalls die Anordnung der Meßeinrichtung (44) zur Wanddickenerfassung der Behälter (2). Die Meßeinrichtung (44) kann beispielsweise im Bereich einer Entnahmeeinrichtung (54) angeordnet werden, die die geblasenen Behälter (2) aus dem Bereich des Blasrades (25) wegführt.

Fig. 8 zeigt eine schematische Darstellung eines Regelungssystems für die Heizelemente (30) bzw. die Heizstrahler (41). Das Regelungssystem ist in Form einer Kaskadenregelung ausgebildet. Ein äußerer Regelkreis erfaßt hinter der Blasstation (3) über die Meßeinrichtung (44) die Wanddicke (2) des Behälters (2) auf einem vorgegebenen Höhenniveau und führt diesen Istwert dem Eingang eines Wanddickenreglers (55) zu. Unmittelbarer Eingangswert für den Wanddickenregler (55) ist die Regeldifferenz zwischen einer vorgegebenen Wanddicke sowie der meßtechnisch erfaßten Wanddicke. Ein Ausgangswert des Wanddickenreglers (55) stellt den Sollwert für einen inneren Temperaturregelkreis bereit.

Einem Temperaturregler (56) wird als unmittelbarer Steuerwert die Differenz zwischen dem Ausgangswert des Wanddickenreglers (55) und einem vom Temperatursensor (53) erfaßten Temperaturwert des Vorformlings (1) auf einem vorgegebenen Höhenniveau zugeführt. Typischerweise wird jedem der Heizstrahler (41) eine in Fig. 8 dargestellte Regelungsstruktur zugeordnet.

Gemäß einer vereinfachten Regelung wird der innere Regelkreis weggelassen und es erfolgt ausschließlich eine Regelung im Hinblick auf die Wanddicke ohne meßtechnische Erfassung und Regelung der Temperatur. Vorteilhafterweise ist mindestens einer der Regler (55, 56) mit einem Integralverhalten ausgebildet, um Regeldifferenzen zu vermeiden. Gemäß einer weiteren Regelungsvariante berücksichtigt die Regelung ein Totzeitverhalten des Regelungssystems aufgrund der Transportweglängen der Vorformlinge (1) bzw. der Behälter (2). Es wird hierbei berücksichtigt, daß eine in Abhängigkeit von der Transportgeschwindigkeit bekannte Verzögerung zwischen einer Stellgrößenveränderung und einer Veränderung der Ausgangsgröße vorliegt.

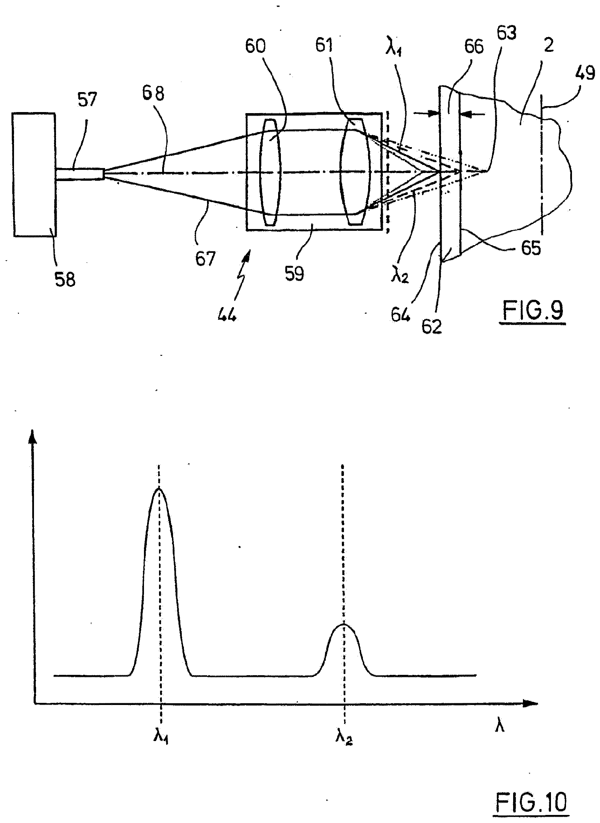

Fig. 9 zeigt eine schematische Darstellung eines Teiles der Meßeinrichtung (44). Zu erkennen ist ein Lichtleiter (57), der mit einer Steuerung (58) verbunden ist. Im Bereich der Steuerung (58) ist unter anderem eine Strahlungsquelle angeordnet, die Licht generiert und in den Lichtleiter (57) einleitet. Der Lichtleiter (57) endet vor einer Fokussiereinrichtung (59), die im dargestellten Ausführungsbeispiel mit zwei Objektiven (60, 61) ausgestattet ist. Die Objektive (60, 61) sind derart angeordnet, daß in Richtung auf eine Behälterwandung (62) des Behälters (2) eine Fokussierung der Lichtstrahlung erreicht wird. Aufgrund der Verwendung mindestens eines chromatisch unkorrigierten Objektives (60, 61) ergeben sich in Abhängigkeit von einer Frequenz der Lichtstrahlung unterschiedliche Fokussierpunkte (63). Bei der Verwendung von Licht mit einer Vielzahl von Frequenzanteilen wird hierdurch jeder Frequenzanteil mit einem spezifischen Abstand zur Fokussiereinrichtung (59) fokussiert. Fig. 9 zeigt für unterschiedliche Frequenzen beispielhafte Fokussierpunkte (63).

Fig. 9 veranschaulicht ebenfalls, daß die Behälterwandung (62) eine äußere Oberfläche (64) und eine innere Oberfläche (65) aufweist. Der äußeren Oberfläche (64) ist hierbei ein Fokussierpunkt (63) zu einer Frequenz λ1 und der inneren Oberfläche (65) ein Fokussierpunkt (63) für eine Wellenlänge λ2 zugeordnet. Die Behälterwandung (62) weist eine Wanddicke (66) auf.

Fig. 10 zeigt die Wellenlängen des von der äußeren Oberfläche (64) und von der inneren Oberfläche (65) reflektierten Lichtanteiles. Eine Reflexion mit hoher Signalamplitude erfolgt nur für Licht mit derjenigen Frequenz, die Fokussierpunkte (63) im Bereich der äußeren Oberfläche (64) oder der inneren Oberfläche (65) aufweist. Das Reflexionssignal wird zurückgestrahlt und von der Fokussiereinrichtung (59) in den Lichtleiter (57) zurückgesandt. Der Lichtleiter (57) überträgt das Reflexionssignal zur Steuerung (58), die die Auswertung der Frequenz- bzw. Wellenlängenunterschiede der einzelnen Reflexionsanteile vornimmt. Die in Fig. 10 veranschaulichte Differenz der Wellenlängen λ1 und λ2 entspricht einer genau definierten Wanddicke (66). Die Wanddicke (66) kann hierdurch mit hoher Genauigkeit sowie äußerst schnell ermittelt werden.

Zurückkommend auf Fig. 9 ist hier hinsichtlich der Lichtstrahlung (67) eine Hauptausbreitungsrichtung (68) eingezeichnet. Typischerweise wird diese Hauptausbreitungsrichtung (68) radial zur Behälterlängsachse (49) orientiert, um relativ zur äußeren Oberfläche (64) eine im wesentlichen senkrechte Ausrichtung der Hauptausbreitungsrichtung (68) zu erreichen.

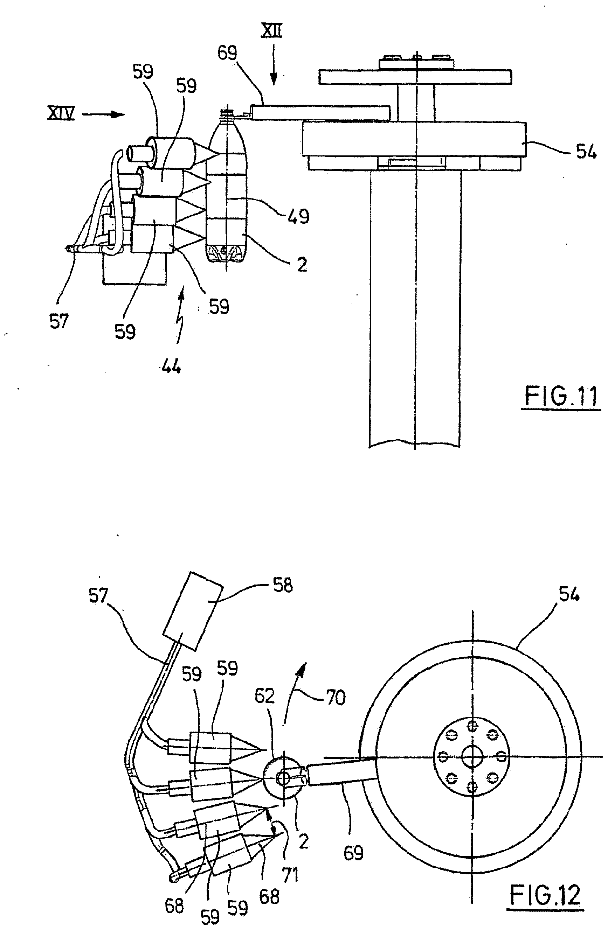

Fig. 11 zeigt eine perspektivische Seitenansicht einer neben einer Übergabeeinrichtung angeordneten Meßeinrichtung (44). Die Übergabeeinrichtung kann dabei als Entnahmeeinrichtung (54) ausgeführt sein. Insbesondere ist daran gedacht, die Übergabeeinrichtung als ein Übergaberad auszubilden, das die Behälter (2) unter Verwendung von Tragarmen (69) haltert. Die Meßeinrichtung (44) weist eine Mehrzahl von Fokussiereinrichtungen (59) auf, die auf unterschiedliche Höhenniveaus des Behälters (2) angeordnet sind. Es ist hierdurch eine Wanddickenmessung auf unterschiedlichen Höhenniveaus des Behälters (2) möglich.

Aus der Draufsicht in Fig. 12 ist zu erkennen, daß die Fokussiereinrichtungen (59) nicht nur auf unterschiedlichen Höhenniveaus entlang der Behälterlängsachse (49) sondern zusätzlich auch in einer Umfangsrichtung des Behälters (2) versetzt angeordnet sind.

Der Versatz der Fokussiereinrichtungen (59) in einer Drehrichtung (70) des Übergaberades (54) ist dabei derart gewählt, daß die Hauptausbreitungsrichtungen (68) der einzelnen Fokussiereinrichtungen in einer horizontalen Projektionsebene im Bereich ihrer Schnittpunkte mit der Behälterwandung (62) relativ zueinander einen Abstand (71) aufweisen. Der Abstand (71) entspricht hierbei dem Weg, den der den Fokussiereinrichtungen (59) zugewandte Wandungsabschnittes des Behälters (2) bei einer Rotation des Übergaberades (54) in Drehrichtung (70) während der Zeitdifferenz von einem Meßzeitpunkt zum folgenden Meßzeitpunkt durchläuft.

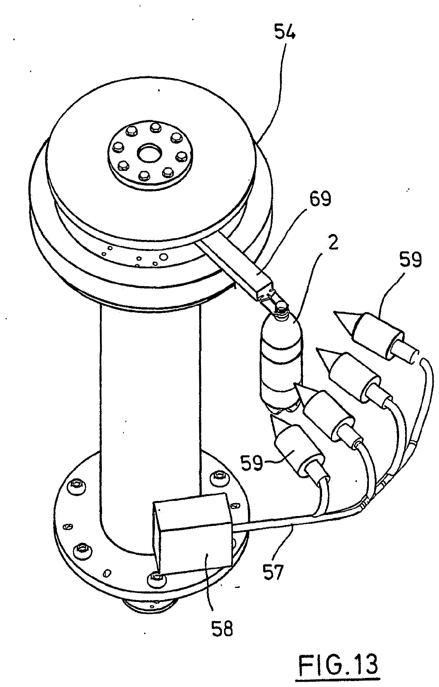

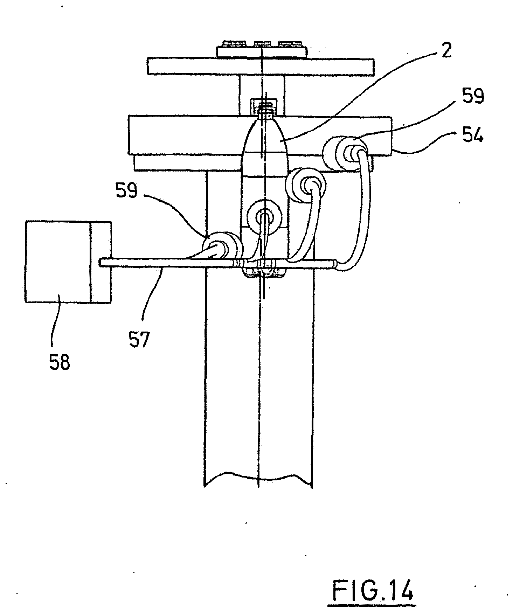

Fig. 13 zeigt die Anordnung gemäß Fig. 11 in einer perspektivischen Darstellung, die insbesondere sowohl den horizontalen als auch den vertikalen Versatz der einzelnen Fokussiereinrichtungen (59) veranschaulicht. Ebenfalls veranschaulicht die Seitenansicht in Fig. 14 nochmals den horizontalen und den vertikalen Versatz der Fokussiereinrichtungen (59) sowie den Anschluß der Fokussiereinrichtungen (59) über den Lichtleiter (57) an die Steuerung (58).

## Patentansprüche

1. Verfahren zur Blasformung von Behältern (2), bei dem ein Vorformling (1) aus einem thermoplastischem Material nach einer thermischen Konditionierung entlang eines Transportweges im Bereich einer Heizstrecke (24) innerhalb einer Blasform (4) durch Blasdruckeinwirkung in den Behälter (2) umgeformt wird, **dadurch gekennzeichnet, daß** im Anschluß an die Blasformung des Behälters (2) auf mindestens einem Höhenniveau des Behälters (2) eine Wanddicke gemessen wird und daß die Messung optisch unter Verwendung eines chromatisch unkorrigierten Objektives (60, 61) durchgeführt und die Wanddicke (66) durch Auswertung von Unterschieden der Frequenzen von Reflexionssignalen ermittelt wird, wobei Strahlung einer ersten Frequenz von einer äußeren Oberfläche (64) und Strahlung einer zweiten Frequenz von einer inneren Oberfläche (65) des Behälters (2) reflektiert wird, wobei diese Wanddickenmessung in einen Regelkreis integriert ist, um die Beheizung der Vorformlinge derart zu steuern, daß vorgegebene Wanddicken bzw. Wanddickenverteilungen erreicht werden, wobei die Wanddickenmessung im Bereich eines rotierenden Übergaberades durchgeführt wird, wobei lediglich ein Teil der Heizelemente (30) der Heizstrecke (24) vom Wanddickenregler (55) gesteuert werden.

2. Verfahren nach Anspruch 1, **dadurch gekennzeichnet, daß** die Wanddickenmessung des Behälters (2) auf mehreren unterschiedlichen Höhenniveaus durchgeführt wird.

3. Verfahren nach Anspruch 1 oder 2, **dadurch gekennzeichnet, daß** die Messung auf den unterschiedlichen Höhenniveaus zeitversetzt durchgeführt wird.

4. Verfahren nach einem der Ansprüche 1 bis 3, **dadurch gekennzeichnet, daß** eine Hauptausbreitungsrichtung (68) der Strahlung im wesentlichen radial zu einer Behälterlängsachse (49) ausgerichtet wird.

5. Verfahren nach einem der Ansprüche 1 bis 4, **dadurch gekennzeichnet, daß** die Hauptausbreitungsrichtungen (68) der einzelnen Fokussiereinrichtungen (59) in einer horizontalen Projektionsebene im Bereich ihrer Schnittpunkte mit der Behälterwandung (62) derart beabstandet werden, daß der zeitversatz zwischen den einzelnen Messungen der einzelnen Fokussiereinrichtungen (59) jeweils der Zeit entspricht, die der Behälter (2) entlang seines vom Übergaberad vorgegebenen Transportweges benötigt, um von einem Meßort zum nächstfolgenden Meßort zu gelangen.

6. Verfahren nach einem der Ansprüche 1 bis 5, **dadurch gekennzeichnet, daß** ein dem jeweiligen Höhenniveau einer Meßstelle des Behälters (2) zugeordneter Heizstrahler (41) hinsichtlich seiner Heizleistung geregelt wird und daß der Regelung als Sollwert ein Vorgabewert für die Wandstärke und als Istwert die gemessene Wanddicke zugeführt wird.

7. Verfahren nach einem der Ansprüche 1 bis 6, **dadurch gekennzeichnet, daß** mindestens zwei Paare von Meßeinrichtungen (44) für die Wanddicke des Behälters (2) und Wanddickenreglern (55), die jeweils auf einander entsprechenden Höhenniveaus angeordnet sind, in jeweils einen Regelkreis zur Durchführung einer niveauspezifischen Wanddickenreglung integriert werden.

8. Verfahren nach einem der Ansprüche 1 bis 7, **dadurch gekennzeichnet, daß** eine Temperaturmessung der Vorformlinge (1) durchgeführt wird.

9. Verfahren nach einem der Ansprüche 1 bis 8, **dadurch gekennzeichnet, daß** eine Temperaturregelung und eine Wanddickenregelung in einer Kaskadenregelung durchgeführt werden.

10. Verfahren nach einem der Ansprüche 1 bis 9, **dadurch gekennzeichnet, daß** die Temperaturregelung in einem inneren Regelkreis der Kaskadenregelung und die Wanddickenregelung in einem äußeren Regelkreis der Kaskadenregelung durchgeführt werden.

11. Verfahren nach einem der Ansprüche 1 bis 10, **dadurch gekennzeichnet, daß** eine Temperaturmessung der Vorformlinge hinter der Heizstrecke (24) durchgeführt wird.

12. Verfahren nach einem der Ansprüche 1 bis 11, **dadurch gekennzeichnet, daß** die Temperaturmessung der Vorformlinge (1) in Transportrichtung der Vorformlinge (1) zwischen der Heizstrecke (24) und einem Blasrad (25) durchgeführt wird.

13. Verfahren nach einem der Ansprüche 1 bis 12, **dadurch gekennzeichnet, daß** eine Wanddickenmessung in Transportrichtung hinter dem Blasrad (25) durchgeführt wird.

14. Verfahren nach Anspruch 1, **dadurch gekennzeichnet, daß** mindestens das in Transportrichtung der Vorformlinge (1) letzte Heizelement (30) vom Wanddickenregler (55) gesteuert wird.

15. Verfahren nach einem der Ansprüche 1 bis 14, **dadurch gekennzeichnet, daß** mindestens zwei Heizelemente (30) parallel vom Wanddickenregler (55) angesteuert werden.

16. Verfahren nach einem der Ansprüche 1 bis 15, **dadurch gekennzeichnet, daß** mindestens das in Transportrichtung der Vorformlinge (1) erste Heizelement (30) ungeregelt eine Grundtemperatur der Vorformlinge (1) erzeugt.

## Claims

1. Method for blow moulding containers (2), in which a preform (1) of a thermoplastic material, after thermal conditioning along a transport path in the region of a heating section (24), is formed into the container (2) within a blow mould (4) by the action of blowing pressure, **characterized in that** after blow moulding the container (2), a wall thickness is measured at at least one height level of the container (2) and **in that** the measurement is carried out visually using a chromatically uncorrected lens (60, 61) and the wall thickness (66) is determined by evaluating differences of the frequencies of reflection signals, wherein radiation of a first frequency is reflected from an outer surface (64) and radiation of a second frequency is reflected from an inner surface (65) of the container (2), wherein this wall thickness measurement is integrated into a control loop in order to control the heating of the preforms in such a way that predetermined wall thickness or wall thickness distributions are achieved, wherein the wall thickness measurement is carried out in the region of a rotating transfer wheel, wherein only one part of the heating elements (30) of the heating section (24) is controlled by the wall thickness controller (55).

2. Method according to Claim 1, **characterized in that** the wall thickness measurement of the container (2) is carried out at several different height levels.

3. Method according to Claim 1 or 2, **characterized in that** the measurement at the different height levels is carried out with a time delay.

4. Method according to one of Claims 1 to 3, **characterized in that** a main propagation direction (68) of the radiation is aligned substantially radially to a longitudinal container axis (49).

5. Method according to one of Claims 1 to 4, **characterized in that** the main propagation directions (68) of the individual focusing devices (59) are spaced apart in a horizontal projection plane in the region of their points of intersection with the container wall (62) in such a manner that the time delay between the individual measurements of the individual focusing devices (59) respectively corresponds to the time that the container (2) requires along its transport path predetermined by the transfer wheel in order to travel from one measuring location to the next measuring location.

6. Method according to one of Claims 1 to 5, **characterized in that** a radiant heater (41) assigned to the respective height level of a measurement point of the container (2) is controlled in terms of its heat output, and **in that** the control is supplied with a preset value for the wall thickness as a desired value and the measured wall thickness as an actual value.

7. Method according to one of Claims 1 to 6, **characterized in that** at least two pairs of devices (44) for measuring the wall thickness of the container (2) and wall thickness controllers (55), which are respectively arranged at corresponding height levels, are integrated respectively into a control loop for carrying out level-specific wall thickness control.

8. Method according to one of Claims 1 to 7, **characterized in that** a temperature measurement of the preforms (1) is carried out.

9. Method according to one of Claims 1 to 8, **characterized in that** temperature control and wall thickness control are carried out in cascade control.

10. Method according to one of Claims 1 to 9, **characterized in that** the temperature control is carried out in an inner control loop of the cascade control and the wall thickness control is carried out in an outer control loop of the cascade control.

11. Method according to one of Claims 1 to 10, **characterized in that** a temperature measurement of the preforms is carried out behind the heating section (24) .

12. Method according to one of Claims 1 to 11, **characterized in that** the temperature measurement of the preforms (1) is carried out in the transport direction of the preforms (1) between the heating section (24) and a blowing wheel (25).

13. Method according to one of Claims 1 to 12, **characterized in that** a wall thickness measurement is carried out in the transport direction behind the blowing wheel (25).

14. Method according to Claim 1, **characterized in that** at least the last heating element (30) in the transport direction of the preforms (1) is controlled by the wall thickness controller (55).

15. Method according to one of Claims 1 to 14, **characterized in that** at least two heating elements (30) are controlled in parallel by the wall thickness controller (55).

16. Method according to one of Claims 1 to 15, **characterized in that** at least the first heating element (30) in the transport direction of the preforms (1) produces a basic temperature of the preforms (1) in a non-controlled manner.

## Revendications

1. Procédé de moulage par soufflage de récipients (2), dans le cadre duquel une préforme (1) en un matériau thermoplastique, après un conditionnement thermique le long d'un parcours de transport dans une zone de chauffage (24), est transformée en un récipient (2) à l'intérieur d'un moule de soufflage (4) sous l'action d'une pression de soufflage, **caractérisé en ce que,** à l'issue du moulage par soufflage du récipient (2), une épaisseur de paroi est mesurée à au moins un niveau de hauteur du récipient (2) et que la mesure est effectuée optiquement au moyen d'un objectif (60, 61) sans correction chromatique, et que l'épaisseur de paroi (66) est déterminée par détermination des différences des fréquences de signaux de réflexion, un rayonnement d'une première fréquence et un rayonnement d'une seconde fréquence étant réfléchis respectivement par une surface extérieure (64) et une surface intérieure (65) du récipient (2), cette mesure d'épaisseur de paroi étant intégrée dans une boucle d'asservissement pour commander le réchauffement des préformes de façon à obtenir des épaisseurs de paroi ou des répartitions d'épaisseur de paroi prédéfinies, la mesure d'épaisseur de paroi ayant lieu dans la zone d'une roue de transfert en rotation, une partie seulement des éléments de chauffage (30) de la section de chauffage (24) étant commandée par un régulateur d'épaisseur de paroi (55).

2. Procédé selon la revendication 1, **caractérisé en ce que** la mesure de l'épaisseur de paroi du récipient (2) est réalisée à plusieurs niveaux de hauteur différents.

3. Procédé selon la revendication 1 ou 2, **caractérisé en ce que** la mesure aux différents niveaux de hauteur est effectuée avec un décalage temporaire.

4. Procédé selon l'une des revendications 1 à 3, **caractérisé en ce qu'**une direction principale de propagation (68) du rayonnement est essentiellement radiale par rapport à un axe longitudinal (49) du récipient.

5. Procédé selon l'une des revendications 1 à 4, **caractérisé en ce que** les directions principales de propagation (68) des différents dispositifs de focalisation (59) dans un plan de projection horizontal sont, au niveau de leurs points d'intersection avec la paroi (62) du récipient, espacées de façon telle que le décalage temporel entre les différentes mesures des différents dispositifs de focalisation (59) corresponde respectivement au temps requis pour le déplacement du récipient (2) d'un point de mesure au point de mesure suivant le long de son parcours imposé par la roue de transfert.

6. Procédé selon l'une des revendications 1 à 5, **caractérisé en ce que** la puissance de chauffage d'un radiateur de chauffage (41) affecté au niveau de hauteur respectif d'un point de mesure du récipient (2) est réglée et qu'une épaisseur de paroi prescrite et l'épaisseur de paroi mesurée sont respectivement transmises à la régulation comme valeur de consigne et comme valeur effective.

7. Procédé selon l'une des revendications 1 à 6, **caractérisé en ce qu'**au moins deux paires de systèmes de mesure (44) et de régulateurs (55) de l'épaisseur de paroi du récipient (2) respectivement agencés à des niveaux de hauteur correspondants sont respectivement intégrées dans une boucle d'asservissement d'un système de régulation d'épaisseur de paroi spécifique à un niveau de hauteur.

8. Procédé selon l'une des revendications 1 à 7, **caractérisé en ce qu'**une mesure de la température des préformes (1) est effectuée.

9. Procédé selon l'une des revendications 1 à 8, **caractérisé en ce qu'**une régulation de température et une régulation d'épaisseur de paroi sont effectuées sous forme de régulation en cascade.

10. Procédé selon l'une des revendications 1 à 9, **caractérisé en ce que** la régulation de température est effectuée dans une boucle d'asservissement intérieure de la régulation en cascade et la régulation d'épaisseur de paroi dans une boucle d'asservissement extérieure de la régulation en cascade.

11. Procédé selon l'une des revendications 1 à 10, **caractérisé en ce qu'**une mesure de la température des préformes est effectuée derrière la section de chauffage (24).

12. Procédé selon l'une des revendications 1 à 11, **caractérisé en ce que** la mesure de la température des préformes (1) est effectuée, dans le sens de transport des préformes (1), entre la zone de chauffage (24) et une roue de soufflage (25).

13. Procédé selon l'une des revendications 1 à 12, **caractérisé en ce qu'**une mesure d'épaisseur de paroi est effectuée dans le sens de transport derrière la roue de soufflage (25).

14. Procédé selon la revendication 1, **caractérisé en ce qu'**au moins le dernier élément de chauffage (30), vu dans le sens de transport des préformes (1), est commandé par le régulateur d'épaisseur de paroi (55).

15. Procédé selon l'une des revendications 1 à 14, **caractérisé en ce qu'**au moins deux éléments de chauffage (30) sont commandés parallèlement par le régulateur d'épaisseur de paroi (55).

16. Procédé selon l'une des revendications 1 à 15, **caractérisé en ce qu'**au moins le premier élément de chauffage (30), vu dans le sens de transport des préformes (1), chauffe la préforme (1) à une température de base non réglée.
